(19) Europäisches Patentamt
European Patent Office
Office européen des brevets

(11) **EP 1 511 200 B1**

(12) **FASCICULE DE BREVET EUROPEEN**

(45) Date de publication et mention
de la délivrance du brevet:
**25.11.2009 Bulletin 2009/48**

(51) Int Cl.:
***H04B 10/17*** *(2006.01)*

(21) Numéro de dépôt: **04292088.4**

(22) Date de dépôt: **25.08.2004**

(54) **Dispositif de régénération d'un signal optique et procédé correspondant.**

Vorrichtung zur Regenerierung eines optischen Signals und entsprechendes Verfahren

Device for regenerating an optical signal and corresponding method

(84) Etats contractants désignés:
**AT BE BG CH CY CZ DE DK EE ES FI FR GB GR HU IE IT LI LU MC NL PL PT RO SE SI SK TR**

(30) Priorité: **28.08.2003 FR 0310263**

(43) Date de publication de la demande:
**02.03.2005 Bulletin 2005/09**

(73) Titulaire: **FRANCE TELECOM**
**75015 Paris (FR)**

(72) Inventeur: **Cuenot, Benjamin**
**22300 Lannion (FR)**

(74) Mandataire: **Santarelli**
**14, avenue de la Grande Armée**
**B.P. 237**
**75822 Paris Cedex 17 (FR)**

(56) Documents cités:
**FR-A- 2 776 131**

• **LIU X ET AL: "IMPROVING TRANSMISSION PERFORMANCE IN DIFFERENTIAL PHASE-SHIFT-KEYED SYSTEMS BY USE OF LUMPED NONLINEAR PHASE-SHIFT COMPENSATION" OPTICS LETTERS, OPTICAL SOCIETY OF AMERICA, WASHINGTON, US, vol. 27, no. 18, 15 septembre 2002 (2002-09-15), pages 1616-1618, XP001161776 ISSN: 0146-9592**
• **BANERJEE S ET AL: "Long-haul 6440 Gbit&sol;s DWDM transmission over commercial fibre types with large operating margins" ELECTRONICS LETTERS, IEE STEVENAGE, GB, vol. 39, no. 1, 9 janvier 2003 (2003-01-09), pages 92-94, XP006019520 ISSN: 0013-5194**

**Description**

La présente invention concerne un dispositif de régénération optique d'un signal porteur d'une information codée par modulation de phase de ce signal. L'invention concerne également un procédé de régénération correspondant.

Plus précisément, l'invention concerne un dispositif de régénération optique d'un signal porteur d'une information codée par modulation de phase de ce signal, ce signal étant transmis à travers un réseau optique et comportant une succession temporelle d'impulsions optiques.

Lorsqu'un signal est transmis dans une fibre optique, il subit un certain nombre de distorsions, par exemple des distorsions d'amplitude, de fréquence ou de phase. Afin de récupérer un signal le plus semblable possible au signal émis, il est alors nécessaire de placer un dispositif de régénération du signal à la sortie de la fibre optique.

On connaît déjà dans l'état de la technique, des dispositifs de régénération optique de l'amplitude des signaux, comme les absorbants saturables par exemple.

Or, les dispositifs de transmission optique actuels, permettant d'obtenir des débits de 40 Gbits/s ou plus, sont de plus en plus utilisés pour des signaux modulés en phase notamment par des modulations du type RZ-DPSK (Differential Phase Shift Keying). Dans ce type de modulation, l'information est codée dans la phase des signaux : par exemple, un bit "1" est codé par une inversion de phase du signal porteur et un "0" par une absence de changement de phase.

Les dispositifs de régénération optique actuels ne permettent pas d'obtenir une régénération correcte des signaux porteurs d'une information codée par modulation de phase puisqu'ils n'agissent que sur l'amplitude des signaux. Par conséquent, la distorsion de phase des signaux qui détériore l'information qu'ils transportent ne peut pas être supprimée ou du moins réduite.

L'invention a pour but de proposer un dispositif de régénération d'un signal, permettant la régénération des signaux porteurs d'une information codée par modulation de leur phase.

L'invention a donc pour objet un dispositif de régénération optique tel que décrit précédemment, caractérisé en ce qu'il comporte un module de déphasage non-linéaire des impulsions optiques, ce module de déphasage comportant un milieu de propagation optique non-dispersif et non-linéaire paramétré de manière à compenser l'effet de la transmission du signal dans le réseau optique, induit sur la différence de phase entre impulsions successives.

Lorsque plusieurs impulsions successives sont transmises dans un milieu non-linéaire, on constate que des interactions non-linéaires entre impulsions successives provoquent des distorsions de phases de ces impulsions.

Afin de réduire l'effet de ces distorsions de phases subies par le signal transmis dans le réseau optique, un dispositif selon l'invention utilise un module de déphasage non-linéaire permettant de recréer des interactions entre impulsions successives. Les interactions entre impulsions successives deviennent alors telles que les distorsions de phases qu'elles induisent compensent celles subies par les impulsions lors de leur transmission dans le réseau optique.

Un dispositif selon l'invention permet donc de régénérer les phases des impulsions d'un signal dont l'information qu'il transporte est codée par modulation de phase.

Selon un mode de réalisation avantageux, le dispositif peut comporter un module d'élargissement linéaire des impulsions situé dans la chaîne de fonctionnement avant le module de déphasage, ce module d'élargissement comportant un milieu de propagation optique dispersif et linéaire, et un module de compensation linéaire de l'élargissement subi par les impulsions dans le module d'élargissement linéaire, situé dans la chaîne de fonctionnement après le module de déphasage, ce module de compensation linéaire comportant un milieu de propagation optique dispersif et linéaire.

En effet, les distorsions dues aux interactions entre impulsions voisines sont d'autant plus sensibles à la non-linéarité du milieu que les impulsions sont temporellement proches et/ou élargies.

Le module d'élargissement linéaire qui accroît la largeur temporelle des impulsions permet d'augmenter la sensibilité et l'efficacité du module de déphasage.

Le module de compensation linéaire permet, après avoir régénéré la phase du signal, de retrouver les largeurs initiales des impulsions.

De façon optionnelle, le dispositif de régénération peut comporter un amplificateur optique situé dans la chaîne de fonctionnement avant le module de déphasage.

Cet amplificateur permet au signal d'atteindre une puissance optique suffisante pour se propager dans le module de déphasage.

Pour que le module d'élargissement fonctionne de manière linéaire, il est préférable que la puissance optique injectée soit relativement faible. Il est donc conseillé de placer l'amplificateur optique entre le module d'élargissement et le module de déphasage en subissant les effets non-linéaires.

Un dispositif de régénération optique selon l'invention peut en outre comporter l'une ou plusieurs des caractéristiques suivantes :

- le dispositif comporte un atténuateur optique situé dans la chaîne de fonctionnement après le module de déphasage ;
- le dispositif comporte des moyens de régénération en amplitude, tel qu'un absorbant saturable ;

L'invention a également pour objet un procédé de régénération optique d'un signal porteur d'une information codée par modulation de phase de ce signal, ce signal étant transmis à travers un réseau optique et comportant une succession temporelle d'impulsion optiques, caractérisé en ce qu'il comporte une étape de déphasage non-linéaire des impulsions optiques, dans un module de déphasage comportant un milieu de propagation optique non-dispersif et non-linéaire paramétré de manière à compenser l'effet de la transmission du signal dans le réseau optique, induit sur la différence de phase entre impulsions successives.

Un procédé de régénération optique selon l'invention peut en outre comporter l'une ou plusieurs des caractéristiques suivantes :

- le procédé comporte une étape d'élargissement linéaire des impulsions réalisée avant l'étape de déphasage par un module d'élargissement linéaire des impulsions comportant un milieu de propagation optique dispersif et linéaire et une étape de compensation linéaire de l'élargissement subi par les impulsions lors de l'étape d'élargissement linéaire, cette étape étant réalisée après l'étape de déphasage par un module de compensation linéaire des impulsions comportant un milieu de propagation optique dispersif et linéaire ;
- on amplifie le signal avant qu'il n'entre dans le module de déphasage ;
- on atténue le signal après sortie du module de déphasage.

L'invention sera mieux comprise à la lecture de la description qui va suivre, donnée uniquement à titre d'exemple et faite en se référant aux dessins annexés dans lesquels :

- la figure 1 représente schématiquement la structure générale d'une installation de transmission optique d'impulsions comportant un dispositif de régénération optique selon l'invention ; et
- la figure 2 illustre une représentation détaillée du dispositif de régénération optique de la figure 1.

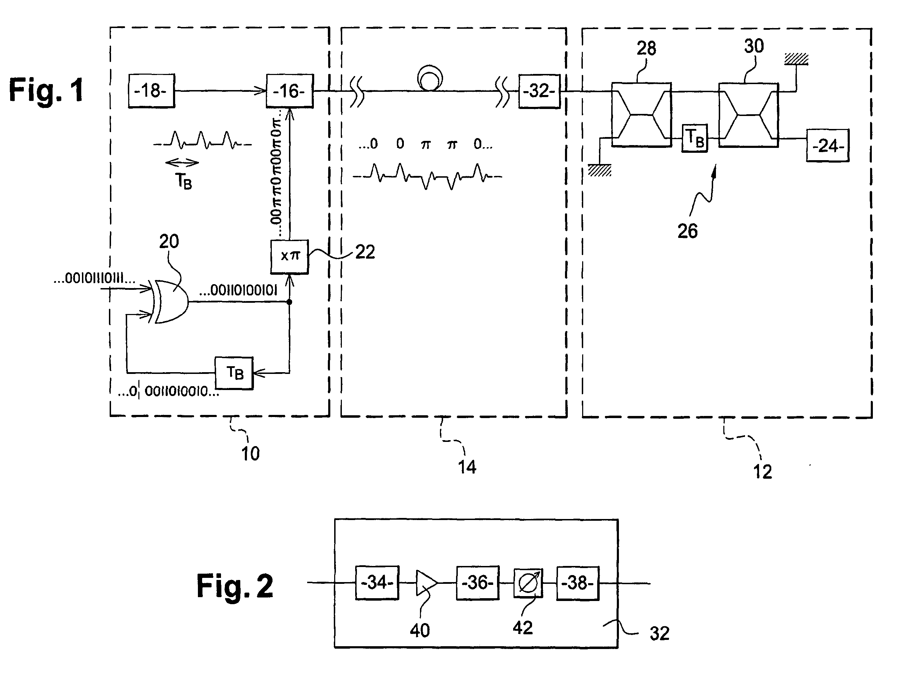

On a représenté sur la figure 1 une installation de transmission optique d'un signal porteur d'une information codée par modulation de phase de ce signal.

Cette installation comporte un dispositif d'émission 10, un dispositif de réception 12 et un réseau optique 14 de transmission du signal. Dans le mode de réalisation représenté, le réseau optique est constitué d'une fibre optique 14 de type classique.

L'information à transmettre du dispositif d'émission 10 vers le dispositif de réception 12 est codée en binaire.

Prenons par exemple la séquence "...00101110111...". Afin de permettre sa transmission dans la fibre optique 14, on module la phase d'un signal optique pour qu'il soit porteur de l'information à transmettre.

Pour cela le dispositif d'émission 10 comporte un générateur 18 d'impulsions optiques. Le dispositif d'émission 10 comporte en outre un modulateur de phase 16. Ce modulateur de phase 16 reçoit en entrée les impulsions optiques fournies par le générateur 18, ainsi qu'une séquence de valeurs de phase de ces impulsions déterminée à partir de la séquence "...00101110111...".

Les impulsions sont espacées d'une durée $T_B$ que l'on nomme « temps bit » et présentent toutes le même spectre fréquentiel.

Le modulateur de phase 16 fournit en sortie des impulsions optiques à la même fréquence que les impulsions d'entrée, mais dont les phases sont porteuses de l'information.

Dans le mode de réalisation choisi, on utilise une modulation RZ-DPSK: un bit "1" est codé par une inversion de phase du signal porteur et un "0" par une absence de changement de phase. Ainsi, la séquence "...00101110111..." sera codée par la succession de valeurs de phase suivante : "...00ππ0π00π0π...".

Pour obtenir automatiquement cette succession de valeurs de phase à partir de la séquence initiale, on utilise une porte logique « ou exclusif » 20, généralement appelée porte logique XOR. Les deux variables d'entrée de cette porte logique sont les données binaires à transmettre "...00101110111..." et les données binaires obtenues en sortie de cette porte après avoir subi un retard d'un temps bit. A l'initialisation, on considère que la sortie vaut 0. La séquence de bits obtenue en sortie de la porte logique 20 est alors : "...00110100101...".

Cette séquence de bits est ensuite envoyée dans un composant 22 qui multiplie par π la séquence de bits qui devient : "...00ππ0π00π0π...". On obtient donc une séquence des phases valant 0 ou π, cette séquence étant fournie en entrée du modulateur de phase 16.

Les impulsions modulées sont ensuite transmises dans la fibre optique 14 jusqu'au dispositif de réception 12.

Notons $E_{gaussien}(t)$ l'équation générale d'une impulsion optique fournie par le générateur 18. Cette impulsion est par exemple une impulsion d'enveloppe gaussienne.

Chaque impulsion transmise est égale à cette impulsion gaussienne, à la phase près notée φ(n) et au décalage temporel près. La n$^{ième}$ impulsion, reçue à l'instant $nT_B$ par le dispositif de réception 12 s'écrit donc :

$$E_n(t) = E_{gaussien}(t - nT_B)e^{i\varphi(n)}.$$

La valeur de la phase $\varphi(n)$ de la n$^{ième}$ impulsion est donnée par la n$^{ième}$ valeur de la séquence des phases.

Le dispositif de réception 12 comprend un détecteur optique 24 qui est sensible à l'intensité des signaux optiques et non pas à leur phase. Par conséquent, on crée à l'aide de coupleurs 3dB un dispositif de changement de modulation 26 permettant de transformer le signal modulé en phase en un signal modulé en amplitude.

Ce dispositif de changement de modulation 26 fonctionne de la façon suivante : les impulsions passent tout d'abord dans un premier coupleur 28 afin d'obtenir deux séquences d'impulsions identiques. L'une des deux séquences est ensuite retardée temporellement d'un temps bit $T_B$. Puis, les deux séquences sont additionnées dans un deuxième coupleur 30 qui réalise la somme entre deux impulsions successives :

$$E_{final}(t) = E_n(t) + E_{n-1}(t - T_B).$$

Ce qui donne, en développant cette équation :

$$E_{final}(t) = E_{gaussien}(t - nT_B)e^{i\varphi(n)} + E_{gaussien}(t - T_B - (n-1)T_B)e^{i\varphi(n-1)}$$

$$E_{final}(t) = E_{gaussien}(t - nT_B)e^{i\varphi(n)} + E_{gaussien}(t - nT_B)e^{i\varphi(n-1)}$$

$$E_{final}(t) = E_{gaussien}(t - nT_B)(e^{i\varphi(n)} + e^{i\varphi(n-1)}).$$

Dans le cas où $\varphi(n)=\varphi(n\text{-}1)$, c'est-à-dire lorsque les deux impulsions successives ont la même phase, le signal final $E_{final}$ vaut $2E_{gaussien}(t\text{-}nT_B)e^{i\varphi(n)}$. Il n'est pas nul, donc la puissance captée par le détecteur optique 24 n'est pas nulle. Cela correspond au cas où la n$^{ième}$ impulsion porte l'information binaire "0".

Dans le cas où $\varphi(n)=\varphi(n\text{-}1)+\pi$, c'est-à-dire lorsque les deux signaux successifs sont en opposition de phase, le signal final $E_{final}$ est nul, donc la puissance captée par le détecteur optique 24 est nulle. Cela correspond au cas où la n$^{ième}$ impulsion porte l'information binaire "1".

Ce dispositif de changement de modulation permet donc effectivement de transformer le signal modulé en phase en un signal modulé en amplitude.

Le détecteur optique 24 interprète le signal final modulé en amplitude et permet de retrouver la séquence de bits d'origine.

Les fibres optiques ne sont cependant pas parfaites. Lors de la transmission, un bruit de phase perturbe le signal optique. A cause de ce bruit de phase, les valeurs des différences des phases des impulsions ne valent plus exactement 0 ou $\pi$, mais des valeurs bruitées proches de 0 ou $\pi$.

Par conséquent, aucune des deux équations $\varphi(n) = \varphi(n\text{-}1)$ et $\varphi(n) = \varphi(n\text{-}1)+\pi$ n'est vérifiée après passage du signal dans le deuxième convertisseur 30, et l'écart entre la valeur minimale et la valeur maximale du signal $E_{final}$ est moins grand que dans le cas d'une transmission idéale.

Il est donc plus délicat pour le détecteur optique 24 de différentier les bits "0" des bits "1", et son taux d'erreurs de détection augmente.

Pour diminuer le taux d'erreurs lors du décodage, on place au bout de la fibre optique 14, avant le dispositif de réception 12, un dispositif 32 de régénération de la phase des impulsions. Ce dispositif de régénération de la phase des impulsions permet d'obtenir des impulsions dont les déphasages sont de nouveau approximativement de 0 ou $\pi$. Il sera détaillé en référence à la figure 2

Un modèle connu permet d'obtenir l'équation d'évolution d'une impulsion gaussienne au cours de sa transmission dans une fibre optique, en fonction de certains paramètres :

$$f(X_1, X_2, X_3, X_4, X_5, X_6, t) = X_1 e^{\frac{-(t-X_2)^2}{X_3^2}} e^{i\left(\frac{X_4}{2}(t-X_2)^2 + X_5(t-X_2)\right)} e^{iX_6}.$$

Les paramètres de cette équation ont la signification suivante :

- $X_1$ représente l'amplitude de l'impulsion ;
- $X_2$ représente le décalage temporel de l'impulsion ;
- $X_3$ caractérise sa largeur ;
- $X_4$ représente une variation de fréquence du deuxième ordre couramment appelée "chirp" de l'impulsion ;
- $X_5$ représente le décalage fréquentiel ; et
- $X_6$ représente le déphasage de l'impulsion.

Dans le cas d'un signal comportant une succession d'impulsions, on montre que la phase $X_6$ d'une impulsion quelconque suit plus précisément l'équation différentielle suivante :

$$\dot{X}_6 = \beta_2\left(\frac{1}{X_3^2} - \frac{X_5^2}{2}\right) + \frac{5\gamma X_1^2}{4\sqrt{2}} + 5\frac{\gamma X_3 X_5 \sqrt{\frac{2}{\pi}}}{X_1^2} \text{Re}[K_{d2} + K_{g2}]$$

dans laquelle Re[ ] est la fonction partie réelle, $\gamma$ est un coefficient caractéristique de la non-linéarité de la fibre optique dans laquelle se propage le signal, et $K_{d2}$ et $K_{g2}$ sont des facteurs caractéristiques des interactions entre impulsions voisines.

Le facteur $K_{d2}$ caractérise les interactions entre l'impulsion considérée et l'impulsion la précédant, tandis que le facteur $K_{g2}$ caractérise les interactions entre l'impulsion considérée et l'impulsion la suivant. Au premier ordre, ces deux facteurs sont donnés par les équations fournies en annexe.

Dans ces équations, les variables ont deux indices : le premier indice qui varie entre 1 et 6 reprend la notation adoptée précédemment dans l'équation d'évolution des impulsions gaussiennes. Le second indice vaut 1 lorsque la variable est relative à l'impulsion considérée, et 2 lorsque la variable est relative à l'impulsion voisine.

$\partial(\varphi)$ représente la différence de phase entre l'impulsion considérée et l'impulsion voisine.

Dans ces deux équations, on voit apparaître les termes $X_{32}$ et $X_{31}$ caractéristiques de la largeur des impulsions. Lorsque $X_{31}$ et/ou $X_{32}$ augmentent, c'est-à-dire lors de l'élargissement des impulsions, les termes $K_{d2}$ et $K_{g2}$ augmentent, favorisant ainsi les interactions non-linéaires entre impulsions.

L'équation différentielle donnant les distorsions subies par la phase comporte l'addition de trois termes. Le premier correspond aux effets linéaires de la fibre optique, le second à certains effets non-linéaires (auto-modulation de phase) et le troisième aux interactions non-linéaires entre impulsions voisines.

Le troisième terme révèle que la phase d'une impulsion est modifiée par une interaction non-linéaire avec les impulsions voisines.

Le dispositif de régénération selon l'invention utilise cette propriété pour agir sur les phases des impulsions. Afin d'augmenter la sensibilité des variations de phases aux interactions non-linéaires, il agit principalement sur les paramètres liés au troisième terme. Ces paramètres sont notamment le paramètre $\gamma$, le paramètre $X_1$ et le paramètre $X_3$.

Le dispositif de régénération de phase 32 est représenté sur la figure 2 de façon détaillée.

Il comporte un module 34 d'élargissement linéaire d'impulsions recevant en entrée les impulsions transmises par la fibre optique 14. Ce module d'élargissement 34 comporte un milieu de propagation optique dispersif et linéaire. De façon pratique, il peut être constitué par une fibre optique classique, dans laquelle les impulsions sont élargies (paramètre $X_3$).

Par exemple, pour un débit de 160 Gbit/s ou de 40 Gbit/s, on utilise avantageusement une fibre optique de dispersion totale égale à -2,72 ps/nm, soit par exemple 30,2 mètres de fibre optique de type DCF de dispersion par unité de longueur égale à - 90 ps/nm/km.

Le dispositif de régénération de phase 32 comporte en outre un module 36 de déphasage non-linéaire des impulsions élargies par le module d'élargissement linéaire 34. Ce module de déphasage 36 reçoit donc en entrée les impulsions fournies par le module 34 d'élargissement linéaire. Il comporte un milieu de propagation optique non dispersif et non-linéaire destiné à compenser l'effet de la transmission du signal dans le réseau optique, induit sur la différence de phase entre impulsions successives.

De façon pratique, ce module de déphasage 36 est constitué d'une fibre optique présentant une forte non-linéarité.

De façon avantageuse, pour des débits de 40 Gbit/s ou 160 Gbit/s, on utilise une fibre de longueur égale à 2 km, de dispersion nulle à la longueur d'onde considérée, d'indice non-linéaire 2,6 10$^{-20}$ m$^2$.W$^{-1}$ et de diamètre de coeur égal à 10 $\mu$m$^2$ afin d'augmenter les effets non-linéaires.

Le dispositif de régénération de phase 32 comporte en outre un module 38 de compensation linéaire de l'élargissement subi par les impulsions dans le module d'élargissement linéaire 34. Ce module de compensation linéaire 38 comporte un milieu de propagation optique dispersif et linéaire. De façon pratique, il est constitué d'une fibre optique classique présentant une dispersion totale opposée à celle du module 34 d'élargissement linéaire, c'est-à-dire 2,72 ps/nm. De façon avantageuse, pour des débits de 40 Gbit/s ou 160 Gbit/s, on utilise 160 m de fibre optique de type SMF de dispersion par unité de longueur égale à 17 ps/nm/km.

Une telle fibre optique permet de retrouver les largeurs initiales des impulsions fournies par la fibre optique 14.

Pour augmenter les effets de non-linéarité du module de déphasage 36, on peut disposer entre le module 34 d'élargissement linéaire et le module 36 de déphasage, un amplificateur optique 40 permettant aux impulsions d'atteindre une puissance suffisante.

Dans ce cas, on peut alors aussi disposer entre le module de déphasage 36 et le module de compensation 38, un atténuateur 42 permettant de diminuer la puissance des impulsions, de sorte que celles-ci ne subissent pas de distorsion non-linéaire lors de leur propagation dans le module de compensation 38.

De façon avantageuse, on utilise un amplificateur optique de puissance de sortie égale à 13,5 dBm à 160 Gbit/s, et un amplificateur optique de puissance de sortie égale à 16,5 dBm à 40 Gbit/s. De même, on utilise de préférence un atténuateur de 15 dB à 40 Gbit/s ou à 160 Gbit/s.

La présence du dispositif de régénération 32 permet d'améliorer le taux d'erreur en sortie du dispositif de réception 12.

Ainsi, une simulation informatique de l'installation décrite précédemment avec les paramètres indiqués, montre que cette installation permet d'améliorer le facteur de qualité Q$^2$ mesurant le taux d'erreurs en sortie de l'installation :

- d'environ 2,5 dB à 160 Gbit/s, lorsque l'on se situe au voisinage de Q$^2$ = 16 dB ; et
- d'environ 3,05 dB à 40 Gbit/s, au voisinage de Q$^2$ = 16 dB.

Il apparaît clairement qu'un dispositif de régénération optique selon l'invention permet de compenser les déphasages subis par des impulsions se propageant dans une fibre optique. En jouant sur les paramètres de largeur des impulsions (X$_3$), grâce à un module d'élargissement linéaire d'une part, sur l'amplitude des impulsions (X$_1$) grâce à la présence d'un amplificateur 40, et sur $\gamma$ grâce à la présence du module de déphasage 36, on peut régler le dispositif de régénération optique 32 pour que ces effets de non-linéarité réduisent, voire compensent l'effet de la transmission du signal dans le réseau optique 14.

Bien entendu, l'invention n'est pas limitée au mode de réalisation décrit précédemment.

En effet, on peut par exemple utiliser le dispositif de régénération 32 décrit précédemment en complément d'un autre dispositif de régénération, par exemple en amplitude, tel qu'un absorbant saturable, afin d'améliorer encore la qualité du signal reçu.

ANNEXE

$$Sd_2 = \frac{S_{12}{}^3 X_{31}\sqrt{2}\sqrt{\pi}\, e^{\left(-\frac{(-X_{21}+Tb-X_{22})^2}{X_{31}{}^2}-\frac{1}{2}IX_{41}(-X_{21}+Tb-X_{22})^2-I(-X_{21}+Tb-X_{22})X_{51}\right)} e^{\left(-\frac{1}{2}\frac{\left(2\frac{I(-X_{21}+Tb-X_{22})}{X_{31}{}^2}-X_{41}(-X_{21}+Tb-X_{22})+X_{52}+X_{51}\right)^2}{6\frac{1}{X_{32}{}^2}+2\frac{1}{X_{31}{}^2}-I(X_{42}-X_{41})}\right)} e^{(-I\xi(t))}}{\sqrt{6\frac{1}{X_{32}{}^2}+2\frac{1}{X_{31}{}^2}-I(X_{42}-X_{41})}}$$

$$K_{62} = \frac{X_{12}{}^4\sqrt{2}\sqrt{\pi}\, e^{\left(-\frac{(-X_{22}-X_{21})^2}{X_{31}{}^2}-\frac{1}{2}IX_{41}(-X_{22}-X_{21})^2-I(-X_{22}-X_{21})X_{51}\right)} e^{\left(-\frac{1}{2}\frac{\left(2\frac{I(-X_{22}-X_{21})}{X_{31}{}^2}-X_{41}(-X_{22}-X_{21})+X_{51}+X_{52}\right)^2}{6\frac{1}{X_{32}{}^2}+2\frac{1}{X_{31}{}^2}-I(X_{42}-X_{41})}\right)} e^{(-I\xi(t))}}{\sqrt{6\frac{1}{X_{32}{}^2}+2\frac{1}{X_{31}{}^2}-I(X_{42}-X_{41})}}$$

**Revendications**

1. Dispositif (32) de régénération optique d'un signal porteur d'une information codée par modulation de phase de ce signal, ce signal étant transmis à travers un réseau optique (14) et comportant une succession temporelle d'impulsions optiques comportant:

   - un module (36) de déphasage non-linéaire des impulsions optiques, ce module de déphasage comportant un milieu de propagation optique non-dispersif et non-linéaire paramétré de manière à compenser l'effet de la transmission du signal dans le réseau optique (14), induit sur la différence de phase entre impulsions successives, **caractérisé en ce qu'**il comporte également
   - un module (34) d'élargissement temporel linéaire des impulsions situé dans la chaîne de fonctionnement avant le module de déphasage (36), ce module d'élargissement temporel comportant un milieu de propagation optique dispersif et linéaire ; et
   - un module (38) de compensation linéaire de l'élargissement temporel subi par les impulsions dans le module d'élargissement temporel linéaire (34), situé dans la chaîne de fonctionnement après le module de déphasage, ce module de compensation linéaire comportant un milieu de propagation optique dispersif et linéaire.

2. Dispositif de régénération optique selon la revendication 1, comportant un amplificateur optique (40) situé dans la chaîne de fonctionnement avant le module (36) de déphasage (36).

3. Dispositif de régénération optique selon la revendication 2, comportant un atténuateur optique (42) situé dans la chaîne de fonctionnement après le module (36) de déphasage.

4. Dispositif de régénération optique selon l'une des revendications précédentes, comportant en outre des moyens de régénération en amplitude, tel qu'un absorbant saturable.

5. Procédé de régénération optique d'un signal porteur d'une information codée par modulation de phase de ce signal, ce signal étant transmis à travers un réseau optique (14) et comportant une succession temporelle d'impulsion optiques comportant:

   - une étape de déphasage non-linéaire des impulsions optiques, dans un module de déphasage (36) comportant un milieu de propagation optique non-dispersif et non-linéaire paramétré de manière à compenser l'effet de la transmission du signal dans le réseau optique (14), induit sur la différence de phase entre impulsions successives, **caractérisé en ce qu'**il comporte également
   - une étape d'élargissement temporel linéaire des imposions réalisée avant l'étape de déphasage par un module (34) d'élargissement temporel linéaire des impulsions comportant un milieu de propagation optique dispersif et linéaire ; et
   - une étape de compensation linéaire de l'élargissement temporel subi par les impulsions lors de l'étape d'élargissement temporel linéaire, cette étape étant réalisée après l'étape de déphasage par un module de compensation linéaire des impulsions comportant un milieu de propagation optique dispersif et linéaire.

6. Procédé de régénération optique d'un signal selon la revendication 5, dans lequel on amplifie le signal avant qu'il n'entre dans le module de déphasage (36).

7. Procédé de régénération optique d'un signal selon la revendication 6, dans lequel on atténue le signal après sortie du module de déphasage.

**Claims**

1. Optical regeneration device (32) for a signal bearing an item of information encoded by phase modulation of that signal, that signal being transmitted over an optical network (14) and comprising a temporal succession of optical pulses, comprising:

   - an optical pulse nonlinear phase shift module (36), this phase shift module comprising a nondispersive and nonlinear optical propagation environment programmed so as to compensate for the effect of the transmission of the signal in the optical network (14), induced on the phase difference between successive pulses **characterized in that** it also comprises,

- a pulse linear temporal broadening module (34), situated in the operating chain before the phase shift module (36), this temporal broadening module comprising a dispersive and linear optical propagation environment; and
- a module (38) for the linear compensation of the temporal broadening undergone by the pulses in the linear temporal broadening module (34), situated in the operating chain after the phase shift module, this linear compensation module comprising a dispersive and linear optical propagation environment.

**2.** Optical regeneration device according to Claim 1, comprising an optical amplifier (40) situated in the operating chain before the phase shift module (36).

**3.** Optical regeneration device according to Claim 2, comprising an optical attenuator (42) situated in the operating chain after the phase shift module (36).

**4.** Optical regeneration device according to one of the preceding claims, also comprising amplitude regeneration means such as a saturable absorber.

**5.** Optical regeneration method for a signal bearing an item of information encoded by phase modulation of that signal, that signal being transmitted over an optical network (14) and comprising a temporal succession of optical pulses, comprising:

- an optical pulse nonlinear phase shift step, in a phase shift module (36) comprising a nondispersive and nonlinear optical propagation environment programmed so as to compensate for the effect of the transmission of the signal in the optical network (14), induced on the phase difference between successive pulses, **characterized in that** it also comprises
- a step of linear temporal broadening of the pulses carried out before the phase shift step by a pulse linear temporal broadening module (34) comprising a dispersive and linear optical propagation environment; and
- a step of linear compensation for the temporal broadening undergone by the pulses during the linear temporal broadening step, this step being performed after the phase shift step by a pulse linear compensation module comprising a dispersive and linear optical propagation environment.

**6.** Method of optical regeneration of a signal according to Claim 5, in which the signal is amplified before it enters the phase shift module (36).

**7.** Method of optical regeneration of a signal according to Claim 6, in which the signal is attenuated after leaving the phase shift module.

**Patentansprüche**

**1.** Vorrichtung (32) zur optischen Regeneration eines Trägersignals einer codierten Information durch Phasenmodulation dieses Signals, wobei dieses Signal über ein optisches Netzwerk (14) übertragen wird und eine zeitliche Folge von optischen Impulsen enthält, die aufweist:

- ein Modul (36) der nichtlinearen Phasenverschiebung der optischen Impulse, wobei dieses Phasenverschiebungsmodul ein nicht-dispersives und nicht-lineares optisches Ausbreitungsmedium aufweist, das so parametriert ist, dass es die Wirkung der Übertragung des Signals im optischen Netzwerk (14) kompensiert, die an der Phasendifferenz zwischen aufeinanderfolgenden Impulsen induziert wird,

**dadurch gekennzeichnet, dass** sie ebenfalls aufweist:

- ein Modul (34) der linearen zeitlichen Impulsverbreiterung, das sich in der Funktionskette vor dem Phasenverschiebungsmodul (36) befindet, wobei dieses Modul der zeitlichen Verbreiterung ein dispersives und lineares Ausbreitungsmedium aufweist; und
- ein Modul (38) der linearen Kompensation der zeitlichen Verbreiterung, die die Impulse im Modul der linearen zeitlichen Verbreiterung (34) erfahren haben, das sich in der Funktionskette hinter dem Phasenverschiebungsmodul befindet, wobei dieses Modul zur linearen Kompensation ein dispersives und lineares optisches Ausbreitungsmedium aufweist.

**2.** Optische Regenerationsvorrichtung nach Anspruch 1, die einen optischen Verstärker (40) aufweist, der sich in der Funktionskette vor dem Phasenverschiebungsmodul (36) befindet.

3. Optische Regenerationsvorrichtung nach Anspruch 2, die ein optisches Dämpfungsglied (42) aufweist, das sich in der Funktionskette hinter dem Modul (36) der Phasenverschiebung befindet.

4. Optische Regenerationsvorrichtung nach einem der vorhergehenden Ansprüche, die außerdem Einrichtungen zur Amplitudenregeneration wie einen sättigbaren Absorber aufweist.

5. Verfahren zur optischen Regeneration eines Trägersignals einer codierten Information durch Phasenmodulation dieses Signals, wobei dieses Signal über ein optisches Netzwerk (14) übertragen wird und eine zeitliche Folge von optischen Impulsen enthält, das aufweist:

- einen Schritt der nichtlinearen Phasenverschiebung der optischen Impulse in einem Phasenverschiebungsmodul (36), das ein nicht-dispersives und nicht-lineares optisches Ausbreitungsmedium aufweist, das so parametriert ist, dass es die Wirkung der Übertragung des Signals im optischen Netzwerk (14) kompensiert, die an der Phasendifferenz zwischen aufeinanderfolgenden Impulsen induziert wird,

**dadurch gekennzeichnet, dass** es ebenfalls aufweist:

- einen Schritt der linearen zeitlichen Verbreiterung der Impulse, der vor dem Schritt der Phasenverschiebung durch ein Modul (34) der linearen zeitlichen Verbreiterung der Impulse durchgeführt wird, das ein dispersives und lineares optisches Ausbreitungsmedium aufweist; und
- einen Schritt der linearen Kompensation der zeitlichen Verbreiterung, die die Impulse im Schritt der linearen zeitlichen Verbreiterung erfahren haben, wobei dieser Schritt nach dem Schritt der Phasenverschiebung durch ein Modul der linearen Kompensation der Impulse durchgeführt wird, das ein dispersives und lineares optisches Ausbreitungsmedium aufweist.

6. Verfahren zur optischen Regeneration eines Signals nach Anspruch 5, bei dem das Signal verstärkt wird, ehe es in das Phasenverschiebungsmodul (36) eintritt.

7. Verfahren zur optischen Regeneration eines Signals nach Anspruch 6, bei dem das Signal nach dem Austritt aus dem Phasenverschiebungsmodul gedämpft wird.

**Fig. 1**

**Fig. 2**

EP 1 511 200 B1

11